# EUROPEAN PATENT APPLICATION

(11) **EP 1 788 695 A1**
(43) Date of publication of application: **23.05.2007**
(21) Application number: 05741481.5
(22) Date of filing: 23.05.2005
(51) Int. Cl.: H02M 3/155

(54) **POWER SUPPLY APPARATUS**

(30) Priority: 17.08.2004 JP 2004237743
(71) Applicant: ROHM CO., LTD., Kyoto-shi, Kyoto 615-8585 (JP)
(72) Inventor: NISHINO, Tatsuki, Tokyo 194-0013 (JP)
(74) Representative: McLeish, Nicholas Alistair Maxwell
(86) International application number: PCT/JP2005/009390
(87) International publication number: WO 2006/018923

(57) **Abstract**

In a power supply apparatus (100) in which a voltage at a terminal on a load circuit (40) is fed back to a control circuit (14) so as to control a step-up operation by use of a booster circuit, a protection function (20) is provided for a voltage fed back to the control circuit (14).

A power supply apparatus (100) includes a booster circuit (10), a protection circuit (20), a PWM control circuit (14) and a current control circuit (16), and the step-up operation is controlled by feeding back a cathode voltage of an LED (40). The protection circuit (20) is provided between an LED terminal (40) and the PWM control circuit (14), and the protection circuit (20) includes a protection constant-current source (22), a clamping transistor (24) and a protection resistor (Rp). Even in the case when the voltage at the LED terminal (108) is high, a voltage at a source terminal of the clamping transistor (24) inputted to the PWM control circuit (14) is clamped to a clamp voltage (Vbat-Vt) or below.

## Description

### TECHNICAL FIELD

The present invention relates to a power supply apparatus using a booster circuit.

### BACKGROUND TECHNOLOGY

For the compact-size information terminals in recent years, such as portable telephones and PDA (Personal Digital Assistance), there are some devices such as LEDs (Light Emitting Diode) used for the backlight of the liquid display, for instance, wherein they require a voltage higher than the output voltage of a battery. For example, Li-ion batteries are often used for these small-size information terminals. The output voltage thereof is normally about 3.5 V, and when fully charged it is about 4.2 V. However, the LED requires, as the drive voltage therefor, the voltage higher than the battery voltage. Accordingly, when the voltage higher than the battery voltage is required, a booster circuit of a switching regulator, switched-capacitor or the like method is used to boost the battery voltage so as to obtain the voltage necessary for driving the load circuit such as an LED (Patent Document 1).

[Patent Document 1]
   Japanese Patent Application Laid-Open No. 2001-223095.

### [DISCLOSURE OF THE INVENTION]

### [Problems to be solved by the invention]

Here, in order to stably operate the load circuit, a booster circuit like this performs a step-up operation by feeding back the voltage at a certain terminal on the load circuit to the control circuit. For example, in the case where the above-described LED is to be driven, a method is considered where a control is performed in a manner such that the voltage at the cathode terminal is of a constant value while the LED luminance is kept steady. Then, the voltage at the cathode terminal will be fed back to the control circuit of the booster circuit.

Under these circumstances, the inventor had come to recognize the following problems to be solved. By this method, at the cathode terminal there appears the voltage where the voltage at the anode terminal is voltage-dropped by the forward voltage Vf of an LED. Thus, in the normal operation, the cathode voltage will be sufficiently lower than the anode voltage. However, the forward voltage Vf of this LED is dependent on the current and during a period of time in which no current flows, it takes a small value close to 0 V. Hence, when the state is switched from a state where the LED emits light to a state where the LED goes out, the voltage drop in the LED is near 0 V in the state where the boosted voltage is being applied to the anode terminal of the LED, and the voltage close to the boosted voltage appears directly in the cathode terminal. Also, at the start and the like of the booster circuit before the current starts flowing through the LED, the forward voltage is very small, whereas immediately after the step-up operation of the booster circuit is started, the voltage close to the output voltage of the booster circuit appears. When such high voltage as have been boosted like this is fed back to the control circuit, it may have effect on the reliability of an internal circuitry. Such a problem may possibly be caused if the operating state is switched at the time a plurality of load circuits are driven.

In other words, there are cases where the voltage fed back to the power supply apparatus rises up constantly or instantaneously at the time when the light goes out, the power supply apparatus is started, the output voltage is switched or the load circuit fluctuates. This voltage may affect the reliability of the circuitry.

The present invention has been made in view of the problems described as above, and an object thereof is to provide a power supply apparatus equipped with a protection function against the voltage fed back to the power supply apparatus.

### MEANS FOR SOLVING THE PROBLEMS

In order to solve the above problems to be solved, a power supply apparatus according to one embodiment of the present invention comprises: a control circuit which controls an output voltage of a booster circuit in a feedback manner so that a voltage of a feedback terminal provided on a path where a load circuit is driven by the booster circuit is brought close to a predetermined voltage value; and a protection circuit provided on a feedback path from the feedback terminal to the control circuit. When a voltage at the feedback terminal has reached the predetermined voltage, the protection circuit has a voltage clamping function of preventing a voltage outputted to the control circuit from rising above a predetermined clamp voltage.

The "path where a load circuit is driven by the booster circuit" means a path which is directed toward the ground, via the load circuit, from the booster circuit.
According to this embodiment, the voltage inputted to the control circuit in feedback is restricted to the clamp voltage or below by the protection circuit. Thus, even in the case when the load circuit is stopped during a step-up operation or the voltage inputted in feedback rises constantly or instantaneously at the time of load fluctuation, affecting the reliability of the circuitry thereby can be prevented.

The protection circuit may include: a resistor; a transistor of which a predetermined clamp voltage is applied to a control terminal thereof; and a constant-current source which delivers current to the resistor and the transistor, wherein the resistor, the transistor and the constant-current source are provided in series between the feedback terminal and a ground terminal.

The "control terminal of a transistor" means a gate terminal of FET (Field Effect Transistor) and a base terminal of bipolar transistor. By applying the clamp voltage to the control terminal and delivering the constant current thereto, the voltage at a source terminal or emitter terminal is clamped by the clamp voltage to a value which has been voltage-dropped by a gate threshold value Vt of FET or a base-emitter voltage Vbe of bipolar transistor.

According to this embodiment, the voltage inputted from the source terminal or emitter terminal of a transistor to the control circuit in feedback is restricted to the clamp voltage or below by the protection circuit. Thus, even in the case where the voltage to be feedback-inputted rises instantaneously at the time of a start-up or load fluctuation, affecting the reliability of the circuitry thereby can be prevented.

The clamp voltage may be the battery voltage. By applying the battery voltage as the clamp voltage, the clamp voltage drops following the battery voltage when the battery voltage is dropped. Hence, the circuit can function further effectively as a protection circuit.

The load circuit may be a light-emitting diode and a voltage at a cathode terminal of the light-emitting diode may be fed back to the protection circuit as the voltage at the feedback terminal. If the load circuit is a light-emitting diode, the voltage at the cathode terminal greatly varies depending on the current that flows. Thus, the protection circuit can suitably protect the control circuit against the variation in the cathode terminal.

In the above-described power supply apparatus, the control circuit may receive a detection signal in accordance with the output voltage of the booster circuit in a feedback manner, and it may control the output voltage of the booster circuit according to an operation mode of electronic equipment that mounts the power supply apparatus, based on either an output of the protection circuit or the detection signal, or based on both the output of the protection circuit and the detection signal.

Two voltages, namely, the output voltage of the booster circuit and the voltage at the feedback terminal on a path through which the booster circuit drives the load circuit are feedback-inputted to the control circuit, and the control circuit switches the feedback voltage to be controlled, according to an operation mode. According to this embodiment, the stabilization of an output suited to the respective operation modes can be sought and realized. Further, the voltage inputted by feedback is protected by the protection circuit. Thus, even if the output voltage varies at the time of a start-up or switching the operation mode, affecting the reliability of the circuitry thereby can be prevented.

Still another embodiment of the present invention relates also to a power supply apparatus. This power supply apparatus comprises a control circuit to which an output voltage, namely a first voltage, of a booster circuit and a second voltage resulting from driving a load with the first voltage are inputted respectively in a feedback manner. This control circuit comprises: a first comparator which compares the first voltage with a desired-value voltage thereof; a second comparator which compares the second voltage with a desired-value voltage thereof; and a detection circuit which detects that the first voltage is lower than the desired-value thereof as a result of comparison by the first comparator or detects that the second voltage is lower than the desired-value voltage as a result of comparison by the second comparator, wherein the control circuit controls the booster circuit in response to a detection result of the detection circuit.

The "second voltage after the first voltage has driven a load" is a voltage dropped as a result that the output voltage of the booster circuit has driven the load circuit, and this is a voltage at one terminal on a load circuit to be controlled by the feedback.
According to this embodiment, the control circuit controls the booster circuit based on one of two feedback voltages, namely the first voltage and the second voltage, whichever is below the desired-value voltage. Thus, the first voltage and the second voltage will not be lower than the desired-value voltages, so that the load circuit can be stably driven.

The detection circuit may include: a constant-current source; a first transistor and a second transistor provided in parallel between the constant-current source and ground; a first amplifier which multiplies a first coefficient by the first voltage and outputs it; a second amplifier which multiplies a second coefficient by the second voltage and outputs it; a first error amplifier in which an output voltage of the first amplifier is inputted to a first input terminal thereof and a voltage at a connection point of the first transistor and the constant-current source is inputted to a second input terminal thereof; and a second error amplifier in which an output voltage of the second amplifier is inputted to a first input terminal thereof and a voltage at a connection point of the second transistor and the constant-current source is inputted to a second input terminal thereof, wherein the detection circuit may output a voltage at a connection point of the first and the second transistor and the constant-current circuit. In this case, either the voltage obtained by multiplying the first voltage by the first coefficient or the voltage obtained by multiplying the second voltage by the second coefficient, whichever is lower than the other, is outputted from the detection circuit. By comparing the voltage outputted from this detection circuit with a predetermined voltage, that the first voltage has become lower than the desired-value voltage as well as that the second voltage has become lower than the desired-value voltage can be detected.

In this power supply apparatus, the protection circuit may be provided anterior to the control circuit to which the second voltage is inputted in a feedback manner, and the protection circuit may clamp an upper bound of the second voltage inputted to the control circuit in a feedback manner.
According to this embodiment, even if the voltage drop in the load circuit gets small due to the fluctuation of the output voltage at the time of a start-up or load variation and therefore the second voltage rises, the clamping will be performed by the protection circuit so that the voltage does not rise above a certain value. Thus, the circuitry can be protected.

It is to be noted that any arbitrary combination of the aforementioned constituent elements and the expression of the present invention changed among a method, an apparatus, a system and so forth are also effective as the embodiments of the present invention.

### EFFECTS OF THE INVENTION

By employing a power supply apparatus according to the present invention, the circuitry can be protected against the rise in the feedback voltage to control a booster circuit and the stabilization of the output can be attempted and achieved.

### BRIEF DESCRIPTION OF THE DRAWINGS

FIG. 1 is a circuit diagram showing a power supply apparatus according to a first embodiment of the present invention.
FIG. 2 shows a relation between a cathode voltage Vled and a feedback voltage Vfb in a protection circuit.
FIGS. 3A and 3B illustrate time waveforms of voltage of the power supply apparatus shown in FIG. 1 when an LED goes out.
FIGS. 4A and 4B illustrate time waveforms of voltage of the power supply apparatus shown in FIG. 1 at the time of a start-up.
FIG. 5 is a circuit diagram showing a power supply apparatus according to a second embodiment of the present invention.

### DESCRIPTION OF REFERENCE NUMERALS

10 booster circuit, 14 PWM control circuit, 16 current control circuit, 20 protection circuit, 22 protection constant-current source, 24 clamping transistor, 40 LED, 50 detection circuit, Rp protection resistor, 100 power supply apparatus, 102 input terminal, 104 output terminal, 106 reference voltage terminal, 108 LED terminal, 200 power supply apparatus, 210 electronic equipment, 300 control circuit.

### THE BEST MODE FOR CARRYING OUT THE INVENTION

### (First embodiment)

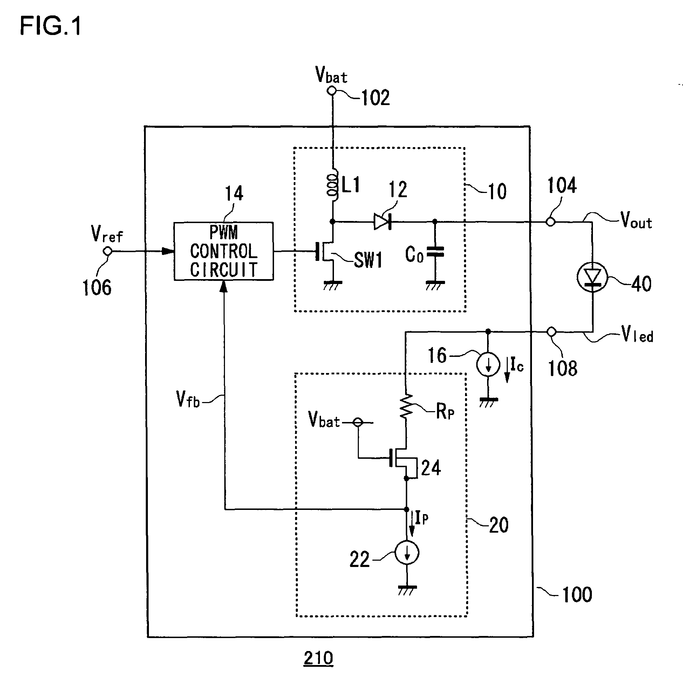

FIG. 1 is a circuit diagram showing a structure of electronic equipment 210 having a power supply apparatus 100 therein according to a first embodiment of the present invention. The electronic equipment 210 is a mobile-phone terminal or PDA, for example. The electronic equipment 210 includes an LED 40, a power supply apparatus 100 and a not-shown battery. This power supply apparatus 100 is a step-up DC/DC converter that drives the LED 40 which is a load circuit, and boosts a battery voltage Vbat so as to generate a drive voltage Vout of the LED 40.

The power supply apparatus 100 is provided with an input terminal 102, an output terminal 104, a reference voltage terminal 106, and an LED terminal 108. The voltages applied to or appearing at these terminals are called an input voltage Vin, an output voltage Vout, a reference voltage Vref, and a cathode voltage Vled, respectively. The power supply apparatus 100 stabilizes the step-up operation by performing a feedback control in a manner that the cathode voltage Vled is brought close to a fixed value determined by the reference voltage Vref.

This power supply apparatus 100 includes a booster circuit 10, a protection circuit 20, a PWM control circuit 14, and a current control circuit 16. The power supply apparatus 100 is integrated into a single chip, except for a switching transistor SW1, a rectifying diode 12, an inductor L1 and an output conductor Co, for example.

The booster circuit 10, which is a commonly used switching regulator, steps up a battery voltage Vbat and then outputs it to the output terminal 104. The input terminal of this booster circuit 10 corresponds directly to the input terminal of the power supply apparatus 100. The booster circuit 10 includes a switching transistor SW1, a rectifying diode 12, an inductor L1 and an output capacitor Co. The energy conversion is carried out between the inductor L1 and the output capacitor Co by turning on and off the switching transistor SW1, so as to step up the input voltage Vbat.

As a load circuit, an LED 40 is connected with the power supply apparatus 100. An anode terminal of the LED 40 is connected to the output terminal 104, and an cathode terminal thereof is connected to the LED terminal 108. The current control circuit 16, which is a circuit to control the current Ic flowing through the LED 40, is connected to the cathode terminal of the LED 40 and functions to adjust the luminance of the LED.

The protection circuit 20 is provided between the LED terminal 108 and the PWM control circuit 14, and the cathode voltage Vled is inputted to the protection circuit 20. This protection circuit 20 includes a protection constant-current source 22, a clamping transistor 24 and a protection resistor Rp.

The clamping transistor 24 is an FET, and the battery voltage Vbat is inputted to the gate terminal of the clamping transistor 24. The drain terminal thereof is connected to the protection resistor Rp of some hundred kΩ, and the source terminal thereof is connected to the protection constant-current source 22. The protection constant-current source 22 delivers a constant current Ip of 1 µA or below to the protection resistor Rp and the clamping transistor 24. It is desired that this constant current Ip is set smaller than the current value of about 50 to 150 mA delivered to LED 40 by the current control circuit 16. As the constant current Ip becomes sufficiently small, there is a possibility that the LED emits light weakly even while the current of current control circuit 16 is being shut off to turn off the LED.

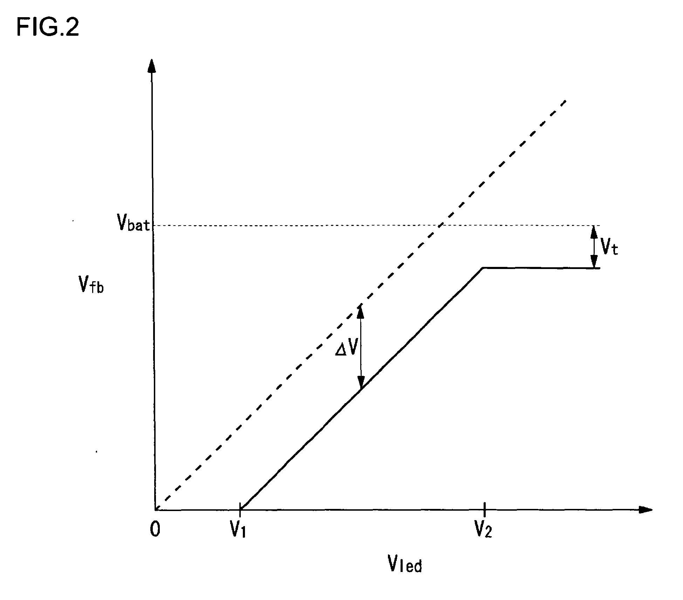

The voltage at the source terminal of the clamping transistor 24 is outputted to the PWM control circuit 14 as a feedback voltge Vfb. FIG. 2 shows a relation between the cathode voltage Vled and the feedback voltage Vfb in the protection circuit 20. When the cathode voltage Vled is low, the clamping transistor 24 does not turn on and therefore the feedback voltage Vfb is 0 V.

As the cathode voltage Vled becomes high to a certain degree, the clamping transistor 24 turns on. When the transistor turns on, a constant voltage drop of ΔV=Ip×Rp is generated in the protection resistor Rp due to the constant current Ip. As a result, a voltage, which is lower than the cathode voltage Vled by the voltage drop caused by the protection resistor Rp and an ON resistance Ron of the clamping transistor 24, appears in the feedback voltage Vfb. That is, Vfb=Vled-Ipx(Rp+Ron). Here, the resistance value of the protection resistor Rp is set to a value which is sufficiently larger than the ON resistance Ron of the clamping transistor 24. Thus, Vfb may be thought of as Vled-IpxRp (Vfb≒Vled-Ip×Rp). The relation V1<Vled<V2 holds in FIG. 2 and a normal step-up operation is carried out in this voltage range.

As the cathode voltage Vled becomes even higher, the ON resistance Ron of the clamping transistor 24 is gradually larger and becomes Ron>Rp. As a result, a gate-source voltage Vgs of the clamping transistor 24 is clamped by a gate threshold voltage Vt of the transistor, so that the feedback voltage Vfb does not become larger than Vbat-Vt.
As described above, the protection circuit 20 functions as a voltage clamp circuit.

The PWM control circuit 14 controls the ON and OFF of the switching transistor SW1 by a PWM (Pulse Width Modulation) signal so as to adjust the output voltage Vout. The reference voltage Vref and the feedback voltage Vfb are inputted to the PWM control circuit 14. The duty ratio of a PWM signal is feedback-controlled so that the feedback voltage Vfb is brought close to a constant value determined by the reference voltage Vref.
As described above, the relation Vfb≒Vled-Ip×Rp holds during a normal operation and Ip is retained at a constant value by the protection constant-current source 22. Thus, keeping the feedback voltage Vfb at a constant value is equivalent to keeping the cathode voltage Vled at a constant value.

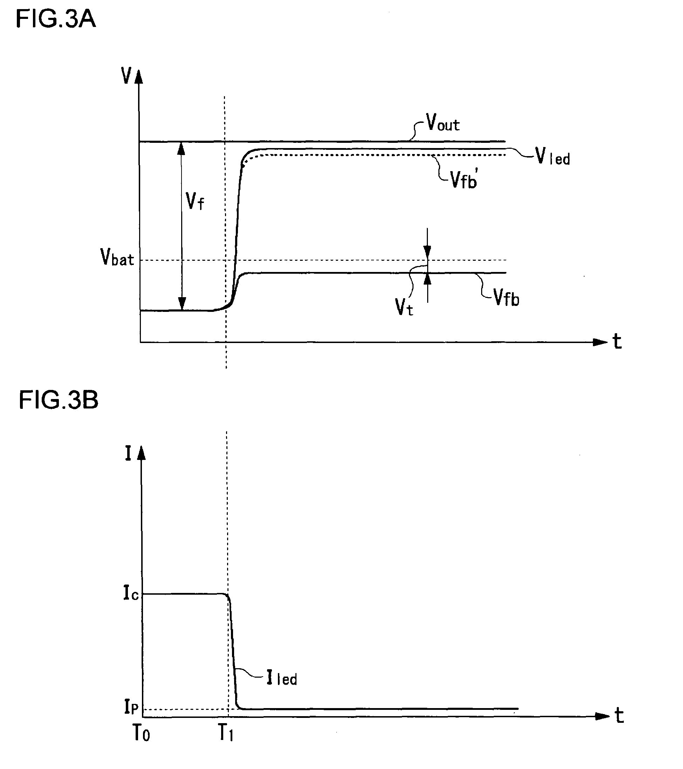

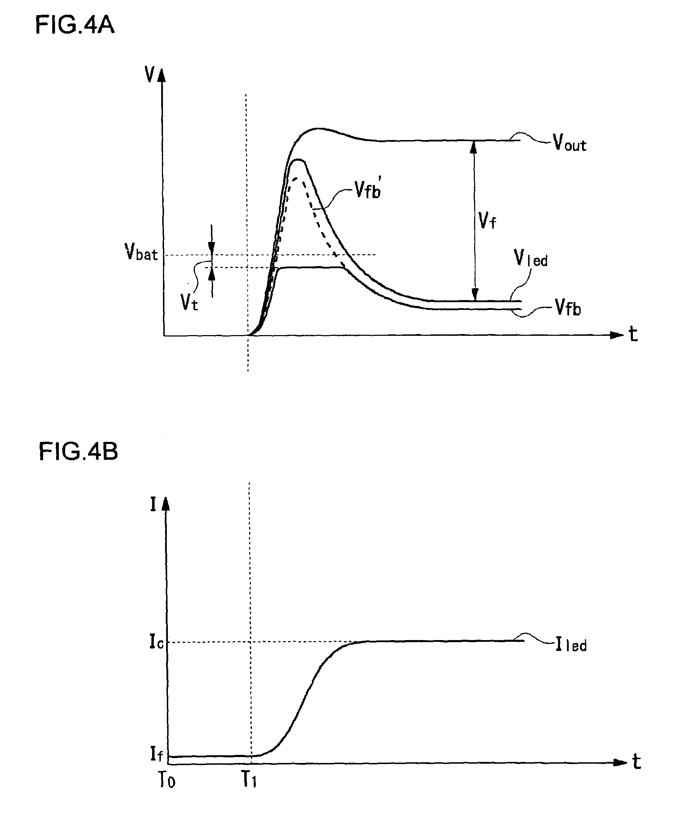

A description will now be given of an operation of the power supply apparatus 100 structured as above in the case when the LED 40 goes out and a step-up operation is started, by referring to FIG. 3 and FIG. 4, respectively. For the ease of viewing, the vertical axes and horizontal axes in FIG. 3 and FIG. 4 adopt different scales from the actual scale.

FIGS. 3A and 3B illustrate the time waveforms of voltage of the power supply apparatus shown in FIG. 1 when the LED goes out. In FIG. 3A, during time T0 to T1 a predetermined output voltage Vout is being outputted and the LED 40 emits light stably. Then a predetermined constant current Ic is flowing through the LED 40, so that the voltage drop at the LED 40 is equal to a forward voltage Vf and the cathode voltage Vled is equal to Vout-Vf.

Now at time T1 the turning off of the LED 40 is instructed, the current control circuit 16 is stopped and, as shown in FIG. 3B, the current flowing through the LED 40 is reduced to the current Ip delivered by the protection constant-current source 22.

As a general characteristic of a diode, the forward voltage Vf depends on the current flowing through an LED, and when the current value is low, it becomes a small value close to 0 V and when the current becomes large, it takes a certain constant value.

As a result, when the current Iled flowing through the LED 40 approaches Ip after time T1, the forward voltage Vf=Vout-Vled is small and therefore the cathode voltage Vled rises up to the vicinity of the output voltage Vout. As a result, if there is no protection circuit 20 provided, a feedback voltage Vfb' which is close to the stepped-up output voltage Vout will be directly feedback-inputted as shown by dotted lines of FIG. 3A. Thus, this feedback voltage Vfb' will be constantly inputted to the PWM control circuit 14, thereby possibly affecting the reliability of the circuitry.

As shown in FIG. 2, even when the cathode voltage Vled goes higher than a certain constant value, the protection circuit 20 clamps so that the feedback voltage Vfb does not exceed the clamp voltage (Vbat-Vt). As a result, even if the cathode voltage Vled approaches the output voltage Vout as indicated by the solid line in FIG. 3A, the feedback voltage Vfb does not go higher than the clamp voltage of Vbat-Vt, thus protecting the PWM control circuit 14.

FIGS. 4A and 4B illustrate time waveforms at the respective terminals of a circuit immediately after a step-up operation is started. In FIG. 4A, during time T0 to T1 the step-up operation is stopped and the output voltage Vout is 0 V. At time T1, the step-up operation of the booster circuit 10 is started. As the boosting starts, the output voltage Vout rises shortly thereafter. Nevertheless, as shown in FIG. 4B, the constant current Ic determined by the current control circuit 16 will not flow immediately but it starts to flow in a manner delayed in time relative to the rise of the output voltage Vout and gradually approaches the constant current Ic.

As a result, when the current Iled flowing through the LED 40 is small immediately after the step-up operation has started at time T1, the forward voltage Vf=Vout-Vled is small. Hence, the cathode voltage Vled becomes high following the output voltage Vout. As a result of this, if no protection circuit 20 is provided, a feedback voltage Vfb' which is close to the stepped-up output voltage Vout will be directly feedback-inputted as shown by dotted lines of FIG. 4A, which in turn possibly affects the reliability of the circuitry.

When the protection circuit 20 operates, the feedback voltage Vfb will not go beyond the clamp voltage of Vbat-Vt even when the cathode Vled becomes high following the output voltage Vout. Thereafter, as the current Iled flowing through the LED 40 approaches the current value Ic, the forward voltage Vf of the diode becomes large and the cathode voltage Vled also becomes low.

As described above, according to the power supply apparatus 100 of the present embodiment, the cathode voltage Vled is fed back to the PWM control circuit via the protection circuit 20. As a result, the feedback voltage Vfb inputted to the PWM control circuit 14 is prevented from becoming higher than or equal to a predetermined voltage value, thereby enhancing the reliability of the circuitry. Note that in the present embodiment the LED terminal 108 corresponds to a terminal, provided on a path through which to drive a load circuit by a booster circuit, which is to be so controlled as to exhibit a constant voltage value.

### (Second embodiment)

A second embodiment of the present invention relates to a power supply apparatus 200 that drives a two-system load circuit. The power supply apparatus 200 switches the operation according to a load circuit to be driven.

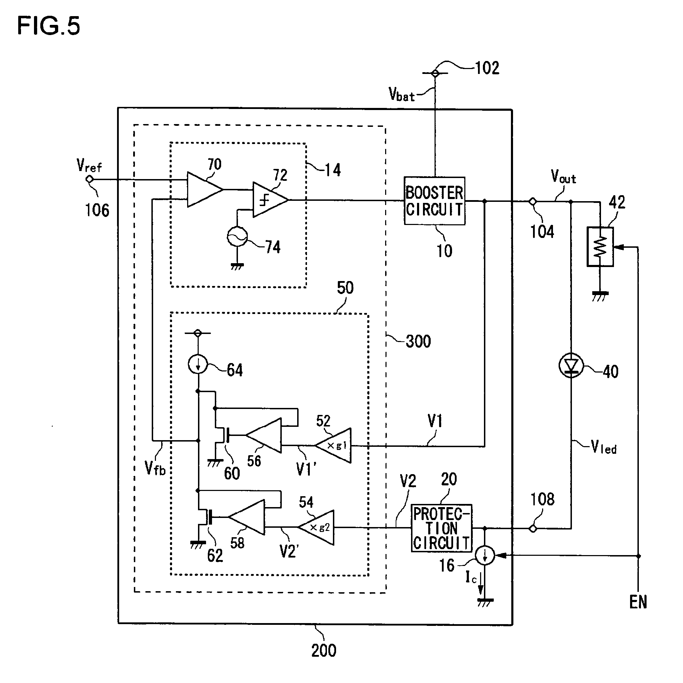

FIG. 5 illustrates a circuit configuration of this power supply apparatus 200. In FIG. 5, the same components as those in FIG. 1 are given the same reference numerals and the explanation thereof is omitted as appropriate. The power supply apparatus 200 includes a booster circuit 10, a protection circuit 20, a current control circuit 16, and a control circuit 300.
As load circuits, a first load circuit 42 and an LED 40, which is a second load circuit, are connected to an output terminal 104. This first load circuit 42 is a circuit for controlling a digital camera, the display and the like, for example, and may be operated by a voltage higher than the LED 40 which is the second load circuit. The LED 40 which is the second load circuit is used for the backlight of liquid crystal and the flash of a camera, for example. The switching of the load circuits is done by a signal denoted by EN in FIG. 5. This signal EN turns on and off the current control circuit 16, and this ON and OFF of the current control circuit 16 has the LED emit light and go out and controls the operation of the first load circuit 42.

The control circuit 300 includes a PWM control circuit 14 and a detection circuit 50.
The detection circuit 50 includes a constant-current source 64, a first amplifier 52, a second amplifier 54, a first transistor 60, a second transistor 62, a first error amplifier 56, and a second error amplifier 58.
The output voltage Vout of the booster circuit 10 is inputted to the detection circuit 50 as a first voltage V1. The cathode voltage Vled of the LED 40 is also inputted to the detection circuit 50 via the protection circuit 20 as a second voltage V2. This protection circuit 20 may be configured as shown in FIG. 1.

The first amplifier 52 and the second amplifier 54 amplify or attenuate the first voltage V1 and the second voltage V2 so as to be converted to a voltage V1' and a voltage V2' which are of the same level. That is, if the respective gains are denoted by g1 and g2, respectively, then V1'=g1×V1 and V2'=g2×V2 and the gains g1 and g2 will be set such that V1'=V2'. For example, if a control target value of the output voltage Vout which is the first voltage V1 is 10 V and a control target value of the cathode voltage Vled which is the second voltage V2 is 1 V, the gains of the first error amplifier and the second error amplifier will be set to 0.1× and 1×, respectively. Further, since the voltages V1' and V2' are values to be compared with a reference voltage Vref, the value of the reference voltage Vref is set such that Vref=V1'=V2'. In this case, it suffices that Vref=1 V.
In this manner, the gain of the first amplifier 52 is often set to a value less than or equal to 1 such as g1=0.1. In such a case, the first amplifier 52 can be easily and simply configured by a resistive divider circuit comprised of two resistors connected in series.

The voltages V1' and V2', which have been set to the same level by the first amplifier 52 and the second amplifier 54, are inputted to the first error amplifier 56 and the second error amplifier 58. The sum of current flowing through the first transistor 60 and the second transistor 62 is controlled so that they are equal to the current value determined by a constant-current source 64. As a result, the detection circuit 50 operates as a selection circuit; that is, the detection circuit 50 selects the lower voltage of the first voltage V1' and the second voltage V2' and outputs it to the PWM control circuit 14 as a feedback voltage Vfb.

The reference voltage Vref and the feedback voltage Vfb are inputted to the PWM control circuit 14, and the difference between the two voltages is amplified by an error amplifier 70 so as to be outputted to a voltage comparator 72. The voltage comparator 72 generates a PWM signal based on both a triangular wave voltage outputted from an oscillator 74 and an output from the error amplifier 70. As a result of the selection by the detection circuit 50, the feedback voltage Vfb is determined to be the lower of the first voltage V1' and the second voltage V2'. Hence, the step-up operation of the booster circuit 10 is controlled so that either the first voltage V1' or the second voltage V2' whichever is lower, is brought close to the reference voltage Vref.

This means that a control is performed such that the output voltage Vout, which is the first voltage, is brought close to the control target value of Vref/g1 and the cathode voltage Vled is brought close to the control target value of Vref/g2. Thus, either one of the output voltage Vout and the cathode voltage Vled is always controlled to be the control target value and the other is set to the target value or higher so as to be outputted.

A description will now be given of an operation of the power supply apparatus 200 configured as above. In this power supply apparatus 200, both the LED 40, which is the second load circuit, and the first load circuit 42 are used simultaneously or only one of them are used depending on a condition of electronic equipment mounted. Here, the output voltage Vout necessary for driving the first load circuit 42 is higher than the output voltage Vout necessary for driving the LED 40.

A case will now be considered where the switching of the state is made from the state in which the LED 40 alone is driven to the state in which both the LED 40 and the first load circuit 42 are driven. When the LED 40 alone is driven, the feedback path of the first voltage V1 is shut off and the step-up operation is controlled so that the cathode voltage Vled is kept to the control target value. The output voltage Vout at this time is lower than the voltage necessary for driving the first load circuit 42, namely the target control value Vref/g1.

The feedback path of the first voltage V1 which has been shut off is now set active to drive the first load circuit 42, too. As a result, since the output voltage Vout, namely the first voltage V1 is lower than the control target value, the detection circuit 50 selects the first voltage V1' as the feedback voltage Vfb and the PWM control circuit 14 controls the booster circuit 10 so that the output voltage Vout, which is the first voltage, is brought close to the control target value. Then, the output voltage Vout rises up to a voltage level required to drive the first load circuit 42, and the cathode voltage Vled also rises with the output voltage Vout.

Since the protection circuit 20 clamps the cathode voltage Vled, which rises following the output voltage Vout, by the clamp voltage of Vbat-Vt so as to be outputted to the detection circuit 50, it can protect the detection circuit 50.

When both the first load circuit 42 and the LED 40 are driven simultaneously and then the emission of the LED 40 is stopped by stopping the current control circuit 16, a circuit operation as explained based on FIG. 3 in the first embodiment is operated. In the present embodiment, too, the cathode voltage Vled is clamped by the protection circuit 20. Thus the detection circuit 50 can be protected by avoiding the inputting of high voltage constantly to the detection circuit 50.

By employing the power supply apparatus 200 according to the present embodiment, even in the case when a plurality of load circuits are connected and the loads are used by switching among them, the respective load circuits can be stably operated.
In a steady state, both the output voltage Vout necessary for stably driving the second load circuit and the cathode voltage Vled necessary for stably driving the LED 40 are controlled by the feedback, so that both the circuits can be stably operated.
When the fluctuation occurs at the start of the step-up operation, load switching or the like, the voltage inputted to the detection circuit 50 is suppressed to the clamp voltage or below by the clamp function of the protection circuit 20. Thus, the voltage does not rise up to a high voltage that impairs the reliability of the circuitry and therefore the reliability of the circuitry will not be impaired.

In the power supply apparatus 200 according to the present embodiment, the first voltage V1 and the second voltage V2 undergo the scaling so as to be converted to the first voltage V1' and the second voltage V2', and the lower of them is compared with the reference voltage Vref, namely the control target value. This is equivalent to comparing the first voltage V1 and the second voltage V2 with the respective control target values and then detecting whether they are below the control target value or not.

The above-described embodiments are merely exemplary, and it is understood by those skilled in the art that various modifications to the combination of each component and process thereof are possible and that such modifications are also within the scope of the present invention.

In the present embodiment, the battery voltage Vbat is inputted to the gate terminal of the clamping transistor 24 in the protection circuit 20. However, the present invention is not limited thereto and other voltage may be inputted; and it is preferably determined based on the withstand voltage of a circuitry or the like.

In the present embodiments, a switching regulator is used as the booster circuit 10, but the present invention is not limited thereto and it can be applied also to a booster circuit of other methods such as a charge-pump circuit. When a charge-pump is to be used, it is preferred that a regulator which stabilizes the input voltage of the charge-pump circuit be provided anterior to the charge-pump circuit and a feedback control be so performed as to bring the output voltage Vout close to a predetermined value.

In the present embodiments, a description has been given of an example where one LED is used as a load. However, a plurality of LEDs may be used and it is preferably a circuit or circuits driven by the boosted voltage. Also, a description has been given of an example where the cathode voltage is controlled as a voltage to be feedback-inputted. This can also be changed, as appropriate, depending on the voltage to be controlled.

The transistor used in the present embodiments is an FET but other types of transistor such as a bipolar transistor may be used. The selection of the transistor may be determined in consideration of the design specifications required by a power supply apparatus, the semiconductor process to be used and the like.

In the present embodiments, the elements constituting the power supply apparatus 100 may all be integrated in a package, or some of them may be comprised of discrete parts. Which of the parts is to be integrated may be determined in consideration of the cost or the area to be occupied.

### Industrial applicability

The power supply apparatus according to the present invention can protect the circuit against the rise of the feedback voltage for controlling a booster circuit and help stabilize the output.

## Claims

1. A power supply apparatus, comprising:
a control circuit which controls an output voltage of a booster circuit in a feedback manner so that a voltage at a feedback terminal provided on a path where a load circuit is driven by the booster circuit is brought close to a predetermined voltage value; and
a protection circuit provided on a feedback path from the feedback terminal to the control circuit;
wherein when a voltage at the feedback terminal has reached the predetermined voltage, said protection circuit has a voltage clamping function of preventing a voltage outputted to said control circuit from rising above a predetermined clamp voltage.

2. A power supply apparatus according to Claim 1, wherein said protection circuit includes:
a resistor;
a transistor of which a predetermined clamp voltage is applied to a control terminal thereof; and
a constant-current source which delivers current to the resistor and the transistor,
wherein the resistor, the transistor and the constant-current source are provided in series between the feedback terminal and a ground terminal.

3. A power supply apparatus according to Claim 1, wherein the load circuit is a light-emitting diode and a voltage at a cathode terminal of the light-emitting diode is fed back to said protection circuit as the voltage at the feedback terminal.

4. A power supply apparatus according to Claim 1 or 2, wherein said control circuit receives a detection signal in accordance with the output voltage of the booster circuit in a feedback manner, and controls the output voltage of the booster circuit in a feedback manner according to an operation mode, based on either an output of said protection circuit or the detection signal, or based on both the output of said protection circuit and the detection signal.

5. A power supply apparatus according to Claim 1, wherein said control circuit and the protection circuit are integrated on a single semiconductor substrate.

6. A power supply apparatus, comprising a control circuit to which an output voltage, namely a first voltage, of a booster circuit and a second voltage resulting from driving a load with the first voltage are inputted respectively in a feedback manner, said control circuit comprising:
a first comparator which compares the first voltage with a desired-value voltage thereof;
a second comparator which compares the second voltage with a desired-value voltage thereof; and
a detection circuit which detects that the first voltage is lower than the desired-value thereof as a result of comparison by the first comparator or detects that the second voltage is lower than the desired-value voltage thereof as a result of comparison by the second comparator,
wherein said control circuit controls the booster circuit in response to a detection result of the detection circuit.

7. A power supply apparatus according to Claim 6, said detection circuit including:
a constant-current source;
a first transistor and a second transistor provided in parallel between the constant-current source and ground;
a first amplifier which multiplies a first coefficient by the first voltage and outputs it;
a second amplifier which multiplies a second coefficient by the second voltage and outputs it;
a first error amplifier in which an output voltage of the first amplifier is inputted to a first input terminal thereof and a voltage at a connection point of the first transistor and the constant-current source is inputted to a second input terminal thereof; and
a second error amplifier in which an output voltage of the second amplifier is inputted to a first input terminal thereof and a voltage at a connection point of the second transistor and the constant-current source is inputted to a second input terminal thereof;
wherein the detection circuit outputs a voltage at a connection point of the first and the second transistor and the constant-current circuit.

8. A power supply apparatus according to Claim 6, wherein said protection circuit is provided anterior to said control circuit to which the second voltage is inputted in a feedback manner, and said protection circuit clamps an upper bound of the second voltage inputted to said control circuit in a feedback manner.

9. Electronic equipment, comprising:
a battery;
a light-emitting diode; and
a power supply apparatus, according to any one of Claims 1-6, which steps up a voltage of said battery so as to supply the stepped-up voltage to an anode terminal of said light-emitting diode,
wherein the control circuit of said power supply apparatus controls the output voltage of the booster circuit in a feedback manner where a voltage at a cathode terminal of said light emitting diode serves as the feedback terminal.
